Europäisches Patentamt

European Patent Office

Office européen des brevets

(11) Veröffentlichungsnummer: **0 266 452**
**A1**

## (12) EUROPÄISCHE PATENTANMELDUNG

(21) Anmeldenummer: 86115422.7

(22) Anmeldetag: 07.11.86

(51) Int. Cl.⁴ **G01L 1/16** , G01L 5/16

(43) Veröffentlichungstag der Anmeldung:
**11.05.88 Patentblatt 88/19**

(84) Benannte Vertragsstaaten:
**AT CH DE FR GB LI**

(71) Anmelder: **Kristal Instrumente AG**
**Eulachstrasse 22**
**CH-8408 Winterthur(CH)**

(72) Erfinder: **Calderara, Reto**
**Sonnhaldenstrasse 9**
**CH-8413 Neftenbach(CH)**
Erfinder: **Sonderegger, Hans Conrad**
**Sonnhaldenstrasse 7**
**CH-8413 Neftenbach(CH)**

(74) Vertreter: **Schmidt, Horst, Dr.**
**Siegfriedstrasse 8**
**D-8000 München 40(DE)**

(54) **Piezoelektrisches Aufnehmerelement.**

(57) Ein piezoelektrisches Aufnehmerelement für Kraft-und Drehmomentmessung besteht aus mindestens einem druckempfindlichen (5) und mindestens einem schubempfindlichen Piezoelement (1) sowie einer zwischenliegenden Trägerplatte (3). Die Piezoelemente (1, 5) sind in Bezug auf das Koordinatensystem $x_A$, $y_A$, $z_A$ der Trägerplatten (3) vororientiert, was bei viereckigen Piezoelementen und Trägerplatten beispielsweise unter Zuhilfenahme der Piezoelement-und Trägerplattenkanten geschehen kann. Das kristallographisch vororientierte Aufnehmerelement kann als Ganzes in Bezug auf das Koordinatensystem der Krafteinleitungsplatten (6) beispielsweise einer Mehrkomponenten-Messplattform orientiert werden. Die Herstellung einer solchen Plattform wird dadurch vereinfacht, es werden Fabrikations-, Test-und Materialkosten gespart. Die Anzahl der Piezoelemente (1, 5) und mechanischer Bauelemente für einen vorgegebenen Messzweck wird reduziert, ebenso die Anzahl der elektrischen Anschlüsse. Zudem können die Messplattformen flacher gebaut und dadurch höhere Eigenfrequenzen erreicht werden.

FIG. 1

## Piezoelektrisches Aufnehmerelement

Die Erfindung betrifft ein piezoelektrisches Aufnehmerelement. Derartige Aufnehmerelemente eignen sich insbesondere für die Messung von in verschiedenen Richtungen wirkenden Kräften und Drehmomenten.

Messplattformen zur Messung der auf Maschinenbauteile wirkenden Kräfte und Momente, wie sie beispielsweise in der DT-PS 19 52 522 und der DT-PS 1 929 479 beschrieben sind, werden aus einer Mehrzahl von Messzellen (meist vier) aufgebaut, die üblicherweise je sechs Piezokristalle enthalten. Die Piezokristalle müssen alle einzeln nach dem durch die Plattform definierten Koordinatensystem x, y, z orientiert werden. Als z-Achse dieses kartesischen Koordinatensystems wird im allgemeinen die senkrecht zu den Krafteinleitungsplatten stehende Achse bezeichnet.

Wenn wir von einer rechteckigen Plattform ausgehen, so erweist es sich im allgemeinen als zweckmässig, die x-Richtung des Koordinatensystems parallel zu einer Kantenrichtung der Krafteinleitungsplatten zu wählen, die y-Richtung senkrecht dazu, also parallel zur anderen Kantenrichtung. Durch das auf diese Weise definierte Koordinatensystem x, /, z ist auch die Zerlegung einer von aussen wirkenden Kraft F in ihre Komponenten Fx, Fy, Fz gegeben, ebenso die Zerlegung einer Drehmomentes M in die Komponenten Mx, My, Mz. Fz stellt eine Druckkraft-oder eine Zugkraft - dar, Fy und Fx Schubkräfte.

Eine Mehrkomponenten-Messplattform besteht ausser aus den Krafteinleitungsplatten beispielsweise aus vier Messzellen. Eine Dreikomponenten-Messzelle enthält normalerweise ein für die Aufnahme von Zug-und Druckkräften geschnittenes Piezokristall-Plattenpaar sowie je ein für den Schubeffekt geschnittenes Plattenpaar für die beiden parellel zu den x-und y-Achsen liegenden Schubkomponenten. Die positive Richtung der kristallographischen z-Achse, die bei Schubkristallen parallel zur Schubspannung gelegt wird, wird beispielsweise durch eine Kerbe am Umfang des scheibenförmigen Plättchens markiert. Die sechs Piezokristalle sind in einer bereits fortschrittlich konstruierten Messzelle, wie sie etwa beschrieben wird in J. Tichy + G. Gautschi, "Piezoelektrische Messtechnik", Springer Verlag, (1980), S. 169, vor der Montage drehbar um deren senkrechte Achse angeordnet. Bei der Montage müssen sie nach dem oben definierten Koordinaten-system mit Hilfe der Markierung genau orientiert werden. Dies bedeutet eine aufwendige Orientierungsarbeit an 24 Kristallen bei einer 4-Messzellen-Plattform. Diese Orientierungsarbeit ist natürlich umso aufwendiger, je mehr Messzellen eine Messplattform enthält. Zudem ist zu bedenken, dass bereits die Herstellung eines einzelnen Piezokristalles eine grosse röntgenographische und polarisationsoptische Orientierungsarbeit erfordert, und dass sowohl bei Herstellung der Einzelkristalle wie bei deren Orientierung in bezug auf das eingangs definierte geometrische Koordinatensystem x, y, z technische Orientierungsfehler passieren können, was Kontrollarbeit, Rückweisungen, evtl. Ausschuss verursacht. Ueberdies weisen solche Messzellen mit sechs Piezokristallen eine relativ grosse Bauhöhe auf, was der Konstruktion einer sehr flachen Messplattform mit sehr hohen Eigenfrequenzen entgegensteht. Ausserdem erfordert eine solche Messzelle mindestens drei elektrische Anschlüsse.

Die Aufgabe der vorliegenden Erfindung wird darin gesehen, ein Aufnehmerelement zu schaffen, welches den Orientierungsaufwand und technische Orientierungsfehler während der Montage beträchtlich reduziert, den Bau einer extrem flachen Messplattform beispielsweise zum Einbau in eine Ausfräsung in einem Maschinenteil, sowie eine Herabsetzung der Zahl der elektrischen Anschlüsse ermöglicht.

Gelöst wird diese Aufgabe erfindungsgemäss dadurch, dass das piezoelektrische Aufnehmerelement aus mindestens zwei Piezoelementen sowie mindestens einer dazwischen angeordneten Trägerplatte aus isolierendem Material besteht, und dass die Piezoelemente in Bezug auf das Koordinatensystem der Trägerplatte kristallographisch vororientiert und mit dieser fest verbunden sind.

Wenn nur eine Trägerplatte verwendet wird, die auf einer Seite ein druckempfindliches Piezoelement, auf der anderen Seite ein - schubempfindliches Piezoelement trägt, so entsteht eine besonders flaches Aufnehmerelement für zwei Kraftkomponenten. Es sind aber auch Anwendungen denkbar, für die es vorteilhaft ist, Aufnehmerelemente für drei Kraftkomponenten einzusetzen. Solche Elemente können analog aus zwei Trägerplatten, einem zwischenliegenden und zwei aussen anliegenden, in bezug auf das Koordinatensystem der Trägerplatten $x_A$, $y_A$, $z_A$ vororientierten Piezoelementen aufgebaut werden. Von entscheidender Bedeutung ist die kristallographisch vororientierte Positionierung der Piezoelemente in bezug auf das Koordinatensystem der Trägerplatten, dessen $x_A$ und $y_A$ -Richtungen im. Falle viereckiger Platten durch deren Kanten vorgegeben sein können, und dass das Element als Ganzes in bezug auf Koordinatensystem x, y, z der Messplattform orientiert werden kann.

Die Erfindung wird nachfolgend anhand der Zeichnung und Ausführungsformen näher erläutert:

Fig. 1 zeigt ein erfindungsgemässes Aufnehmerelement mit rechteckigen Piezoelementen.

Fig. 2 zeigt ein Aufnehmerelement mit Krafteinleitungsplatten in perspektivischer Ansicht.

Fig. 3 zeigt ein Aufnehmerelement mit Krafteinleitungsplatten in Aufsicht.

Fig. 4 zeigt die Orientierung des Aufnehmerelementes als Ganzes in bezug auf das Koordinatensystem der Krafteinleitungsplatten, wovon nur die untere dargestellt ist.

Fig. 5 zeigt ein Aufnehmerelement von oben gesehen in perspektivischer Ansicht.

Fig. 6 zeigt ein Aufnehmer-Element von unten gesehen in perspektivischer Ansicht.

Fig. 7 zeigt eine geschnittene perspektivische Ansicht eines Aufnehmerelementes für zwei Kraftkomponenten, zwischen den Krafteinleitungsplatten.

Fig. 8 zeigt ein rechteckiges Aufnehmerelement für drei Kraftkomponenten, mit zwei Trägerplatten und drei Piezokristallen.

Fig. 9 zeigt ein Aufnehmerelement mit kreisringförmigen Kristallen in perspektivischer Darstellung.

Fig. 10 zeigt ein Aufnehmerelement mit elektrischen Anschlüssen und einer elektrisch leitenden Beschichtung der Trägerplatten.

Fig. 11 zeigt ein Aufnehmerelement mit paralleler Orientierung der kristallographischen z-Achse ($z_K$) beider Piezokristalle.

Fig. 12 zeigt ein Aufnehmerelement mit gekreuzter Orientierung der kristallographischen z-Achsen ($z_K$) beider Piezokristalle.

Fig. 13 zeigt ein Aufnehmerelement aus zwei Einzelelementen, wobei die Achsen der Schubempfindlichkeit der Schubkristalle senkrecht aufeinander stehen.

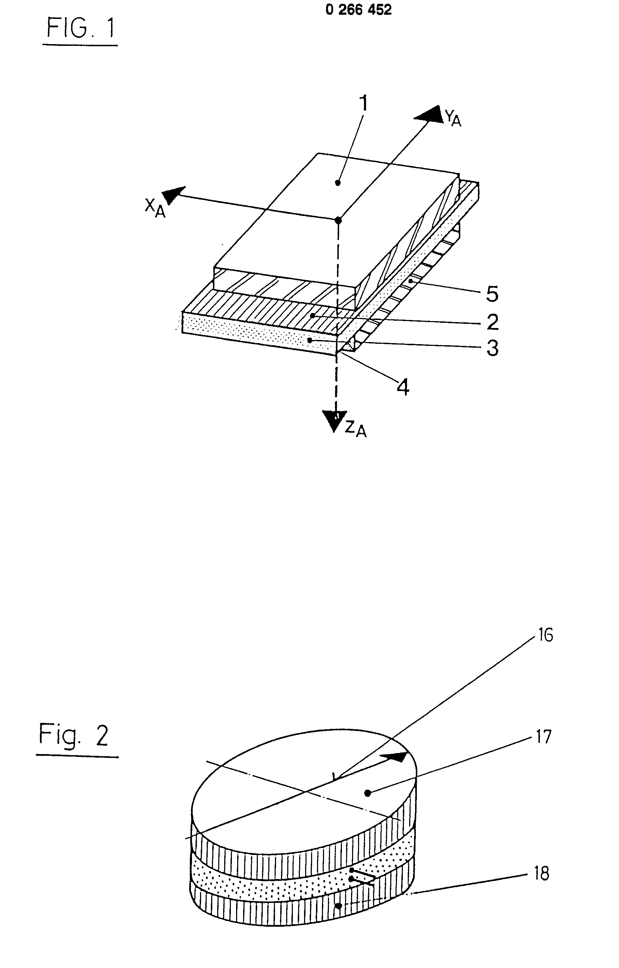

Fig. 1 zeigt eine bevorzugteAusführungsform eines Aufnehmerelementes. Sowohl die Trägerplatte 3 wie die beiden Piezokristalle 1, 5 sind rechteckig. Zwischen dem oberen 1 und dem unteren Piezoelement 5, die beide kristallographisch in bezug auf das Koordinatensystem des Aufnehmerelementes $x_A$, $y_A$, $z_A$ orientiert sind, befindet sich eine elektrisch isolierende Trägerplatte 3, entweder beidseitig vollständig mit elektrisch leitfähigen Beschichtungen 2, 4 oder partiell mit Leiterbahnen versehen zwecks Ableitung der durch die eingeleiteten Kräfte entstehenden elektrischen Signale. Im darstellten Element ist auf der oberen Seite der Trägerplatte ein schubempfindliches 5, auf der unteren Seite ein druckempfindliches Piezoelement 1, positioniert. Die Orientierung des Aufnehmerelementes als Ganzes in bezug auf das durch die Krafteinleitungsplatten gegebenen Koordinatensystem x, y, z kann im Falle viereckiger Platten leicht anhand deren Kanten und genau geschliffenen Oberflächen geschehen.

Fig. 2 zeigt ein Aufnehmerelement analog Fig. 1, das mit zwei Krafteinleitungsplatten 17, 18 fest verbunden ist. Die leitenden Schichten 2, 4 auf der Trägerplatte 3 sind mit zwei Anschlussdrähten herausgeführt. Auf einer der Krafteinleitungsplatten ist die Richtung der Schubempfindlichkeit durch einen Pfeil 16 markiert.

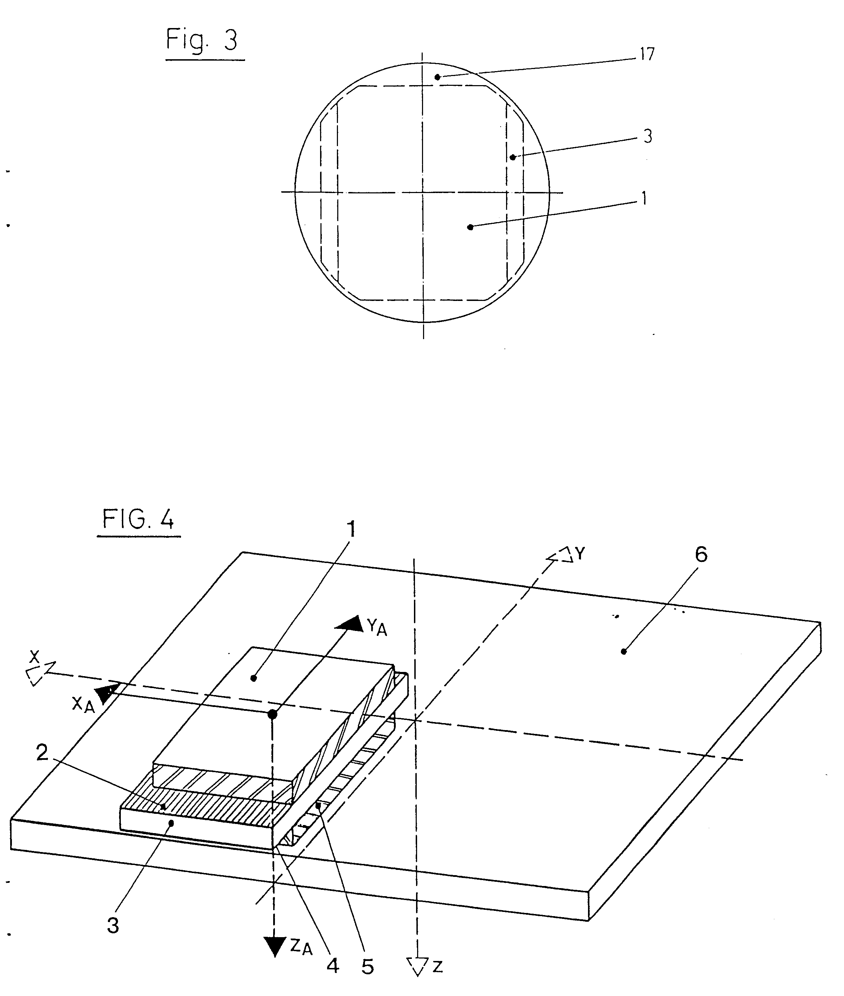

Fig. 3 zeigt das Aufnehmerlement gemäss Fig. 2 in Projektion. Gestrichelt eingezeichnet sind darin das obere Piezoelement 1 und die Trägerplatte 3. In dieser bevorzugten Ausführungsform sind diese als rechteckige Platten mit abgerundeten Ecken gestaltet.

Fig. 4 zeigt ein Aufnehmerelement gemäss Fig. 1 auf einer unteren Krafteinleitungsplatte 6, wobei die Ausrichtung des Aufnehmerelementes zum Koordinatensystem x, y, z der Krafteinleitungsplatte 6 anhand paralleler Kanten dargestellt ist. Auf einer Krafteinleitungplatte können mehrere Aufnehmerelemente angeordnet sein. Diese und die obere Krafteinleitungsplatte sind übersichtlichkeitshalber nicht dargestellt.

Das geometrische Koordinatensystem x, y, z der Krafteinleitungsplatten ist so gewährt, dass x und y kantenparallel und z senkrecht auf x, y und der Plattenebene verläuft. Das Koordinatensystem $x_A$, $y_A$, $z_A$ des dargestellten Aufnehmerelementes ist durch die Kanten $x_A$, $y_A$ der Trägerplatte 3 und deren Normale $z_A$ definiert.

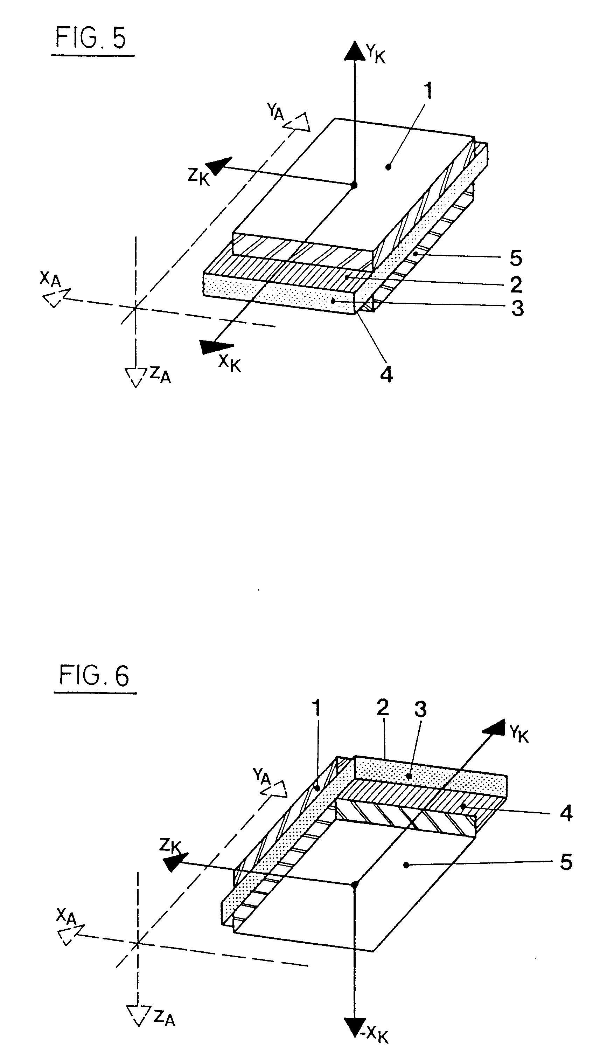

Fig. 5 und 6 zeigen die kristallographisch vororientierte Positionierung der Piezoelemente 1, 5 auf der Trägerplatte 3, wobei das - schubempfindliche Piezoelement und in Fig. 6 die Ansicht von unten auf das druckempfindliche Piezoelement 5 dargestellt ist.

Das Schubelement 1 (Fig. 5) ist so geschliffen, dass seine Längskanten genau parallel zu den kristallographischen x-und z-Achsen (hier mit $x_k$ und $z_k$ bezeichnet) verlaufen, während die kristallographische y-Achse (hier mit $y_k$ bezeichnet) senkrecht zur grössten Fläche des Piezoelementes 1 steht. Die Piezoelemente 1, 5 und die Trägerplatte 3 werden planparallel geschliffen und es wird die Trägerplatte 3 mit einer Anschlagvorrichtung parallel zu den Elementenkanten ausgerichtet. Wenn die Kanten der in Fig. 5 und 6 rechteckig dargestellten Trägerplatte 3 ebenso genau senkrecht zueinander stehen, so kann das Element rein mechanisch durch Parallelstellung der Elementenplattenkanten und der Trägerplattenkanten auf der Trägerplatte orientiert fixiert werden, wobei für die spätere richtungsgemässe Orientierung des gesamten Aufnehmerelementes in Bezug auf das geometrische Koordinatensystem der Krafteinleitungsplatten beispielsweise beim seitlichen Austrittspunkt der positiven kristallographischen z-Richtung ($z_k$) aus dem Schubelement eine in der Zeichnung nicht dargestellte Marke angebracht werden kann.

In analoger Weise wird das in Fig. 6 dargestellte Druckelement 5 kristallographisch fachgerecht geschnitten, wobei hier die kristallographischen y-und z-Richtungen (mit $y_k$ und $z_k$ bezeichnet) parallel zu den Längskanten des Piezoelementes 5 verlaufen. Die orientierte Fixierung auf der Trägerplatte 3 erfolgt, auf deren anderen Seite, gegebenenfalls im selben Arbeitsgang. Die erforderliche Bearbeitung der Piezoelemente 1, 5 wurde hier in vereinfachter Weise als Schleifen beschrieben. Selbsverständlich sind zur Erreichung der erforderlichen Genauigkeit auch Läpp-und Polieroperationen notwendig.

Bei den genannten anspruchsvollen Orientierungsarbeiten ist es einleuchtend, dass die Schaffung eines Aufnehmerelementes mit vororientierten Piezoelementen, das als Normteil bei den verschiedensten Anwendungen eingesetzt werden kann, einen beträchtlichen Rationalisierungseffekt zur Folge hat. Auch ist bei entsprechender Normierung der Elemente zusätzlich eine bebeträchtliche Reduktion der Anzahl Einzelelemente für einen gegebenen Anwendungszweck, etwa eine Messplattform für Zerspanungsvorgänge, möglich, was sowohl Orientierungs-und Testkosten, als auch Elementen-Herstellungskosten spart. Auf die Reduktion der Anzahl der Elemente wird später näher eingegangen werden.

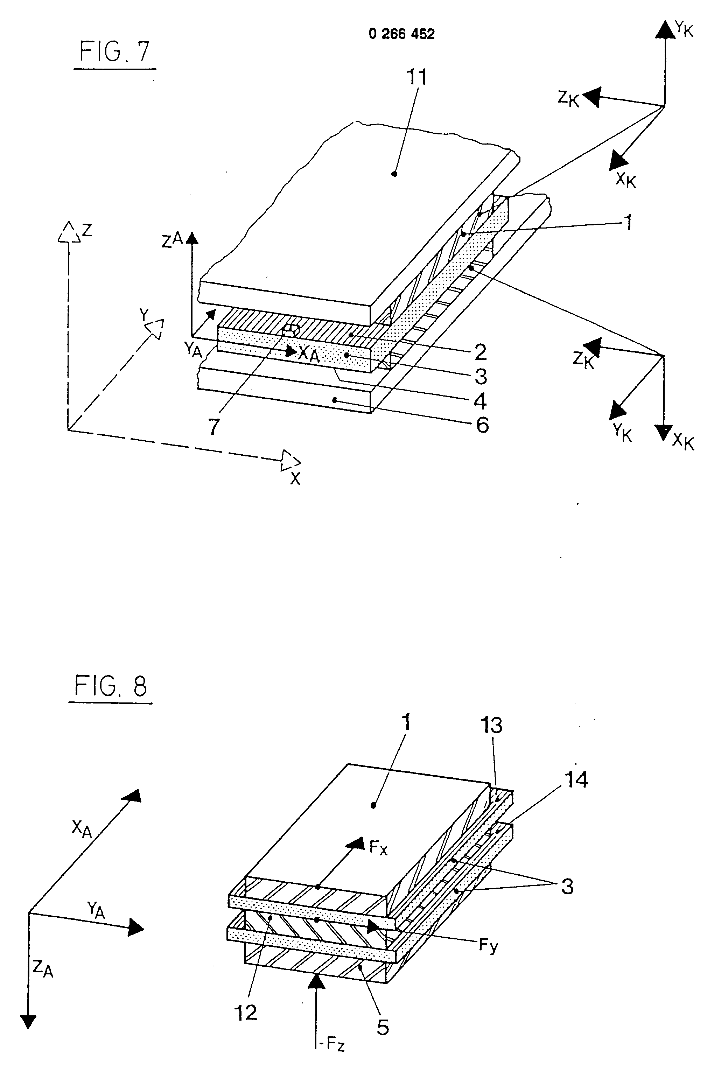

Fig. 7 zeigt, zusammenfassend und verdeutlichend, eine geschnittene perspektivische Darstellung eines zwischen zwei Krafteinleitungsplatten 6, 11 liegenden Aufnehmerelementes. Die beiden Krafteinleitungsplatten müssen erfindungsgemäss nicht Teil einer von der auszumessenden Maschine separierbaren Messplattform sein. Im Gegenteil wird es sich in einigen Anwendungsfällen als vorteilhaft erweisen, die Krafteinleitung direkt über angrenzende plane Oberflächen der in die Messung einbezogenen Maschinenteile erfolgen zu lassen.

Fig. 8 stellt, ebenfalls erfindungsgemäss, ein Aufnehmerelement mit drei Piezoelementen 1, 5, 12 und zwei zwischenliegenden Trägerplatten 13, 14 dar, also ein Aufnehmerelement für drei Kraftkomponenten. Es kann beispielsweise so ausgelegt sein, dass das oberste Piezoelement 1 empfindlich ist für eine Schubkraftkomponente Fx, d.h. parallel zur x-Richtung, das mittlere Piezoelement 12 für eine Schubkraftkomponente Fy, und das untere Piezoelement 5 für eine Druckkraft Fz.

Ein solches Element wird dann eingesetzt, wenn die x-, y-und z-Komponenten einer Kraft vorteilhafterweise in einem einzigen Aufnehmerelement gemessen werden. Entscheidend ist auch hier die kristallographische Vororientierung der Piezoelemente in Bezug auf das Koordinatensystem $x_A$, $y_A$, $z_A$ der Trägerplatten, welche es erlaubt, das Element bei der Montage einer Messplattform als Ganzes zu orientieren.

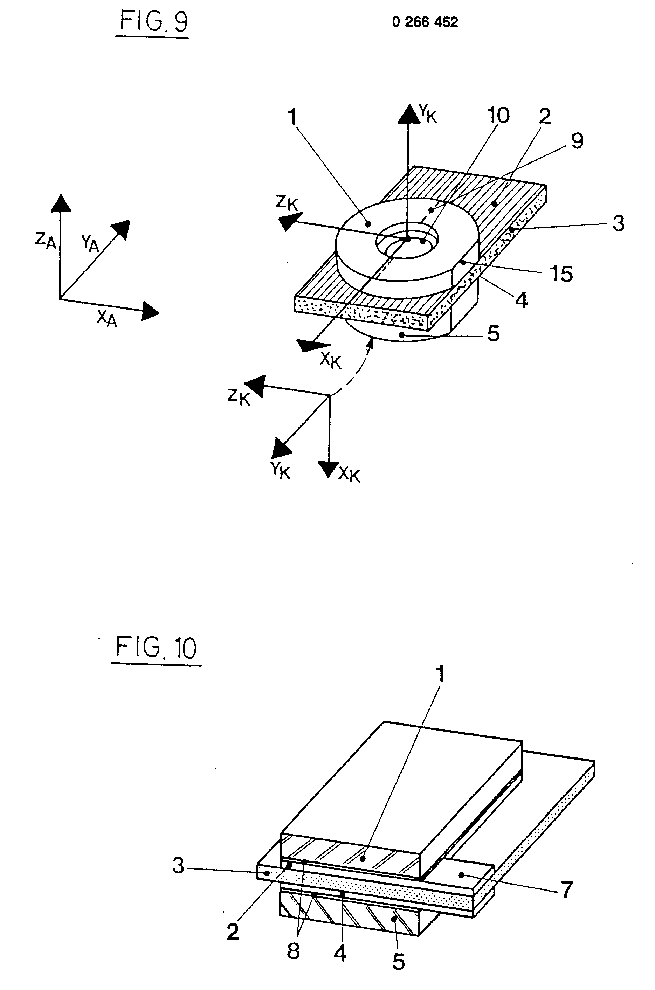

Fig. 9 zeigt ein Aufnehmerelement mit ringförmigen Piezoelementen 1, 5, aber rechteckiger Trägerplatte 3. Dargestellt ist die Aufsicht auf das Schubelement 1 mit den kristallographischen Achsen $x_k$, $y_k$, $z_k$, wobei $z_k$ und $x_k$ in der Ebene des Kristalls liegen, wie bei dem rechteckigen Schubelement der Fig. 5. Die Ausrichtung des Elementes in bezug auf das geometrische Koordinatensystem $x_A$, $y_A$, $z_A$ der Trägerplatte 3, nach Kristallkanten ist hier ebenfalls möglich, falls die Piezoelemente mit angeschliffenen Orientierungsfacetten 15 versehen werden, welche parallel zu einer kristallogrphischen Achse verlaufen.

Anstelle von Orientierungsfacetten können zur Ausrichtung der Piezoelemente 1, 5 jedoch auch zum Beispiel Markierungslinien oder Kerben 9 angebracht werden.

Fig. 10 zeigt eine Ausführungsform der Erfindung mit elektrischen Anschlüssen 7 für die Abführung der Messignale, sowie eine bevorzugte Ausführungsform für den elektrischen Kontakt zwischen den elektrisch leitenden Schichten 2, 4 auf der Trägerplatte 3 und den Elementen 1, 5. Im allgemeinen werden die den Krafteinleitungsplatten anliegenden Elementenoberflächen auf Erdpotential gesetzt. Dann entstehen bei Krafteinwirkung auf den der elektrisch isolierenden Trägerplatte anliegenden Elementenoberflächen Ladungen, die für die Messungen abgeführt werden müssen. Dies bedingt einerseits elektrisch leitende Schichten auf beiden Seiten der Trägerplatte, flächendeckend oder als Leiterbahnen, andererseits eine Fixierung der Piezoelemente auf der Trägerplatte, die elektrisch gut leitet. Diese Fixierung geschieht vorteilhafterweise mit einem elektrisch leitenden Kleber, der in einer dünnen Schicht 8 zwischen Element und der elektrisch leitenden Beschichtung der Trägerplatte 3 aufgebracht ist.

Die elektrischen Verbindungen zwischen den Aufnehmerelementen und Anschlusselementen wie Kabel, Stecker oder Schaltungsplatinen können beispielsweise durch Anlöten von Drähten oder Metallstreifen an die Kontaktflächen 7 der Trägerplatte 3 hergestellt werden.

Für ein Aufnehmerelement gemäss Fig. 10 werden nur zwei elektrische Anschlüsse benötigt, während bei konventioneller Zweikomponentenaufnehmern noch zusätzlich zwei Signalelektroden und mindestens eine intern verbundene Masseelektrode erforderlich sind.

Durch die erfindungsgemässen Aufnehmerelemente können also elektrische und mechanische Komponenten sowie Arbeitsaufwand eingespart werden.

Für die Anwendung der Aufnehmerelemente in Messplattformen ist es nützlich, die Elemente so stark vorzuspannen, dass die Piezoelemente auch bei maximaler Zuglast nie entlastet werden. Um hohe Kräfte ohne Kristallbruch übertragen zu können, ist eine möglichst homogene Kraftverteilung über die Piezoelementenflächen anzustreben. Hierzu eignen sich besonders ringförmige Ausführungen, wie in Fig. 9 dargestellt. Durch die zentrale Bohrung 10 kann ein Vorspannbolzen durchgeführt werden.

Wenn Messplattformen für drei Kraftkomponenten Fx, Fy, Fz oder für Kraft-und Drehmomentmessung aus Aufnehmerelementen mit nur je einem schub-und druckempfindlichen Piezoelement aufgebaut werden sollen, so ist es notwendig, bei je einem Teil der Aufnehmerelemente die Richtungen der Schubempfindlichkeit parallel zum einen und zum anderen Kantenpaar der Messplattform zu orientieren. Dies kann realisiert werden, indem die kristallographischen Achsen der - schubempfindlichen Piezoelemente um 90°, um die Flächennormale des einen Teils der Aufnehmerelemente gedreht werden.

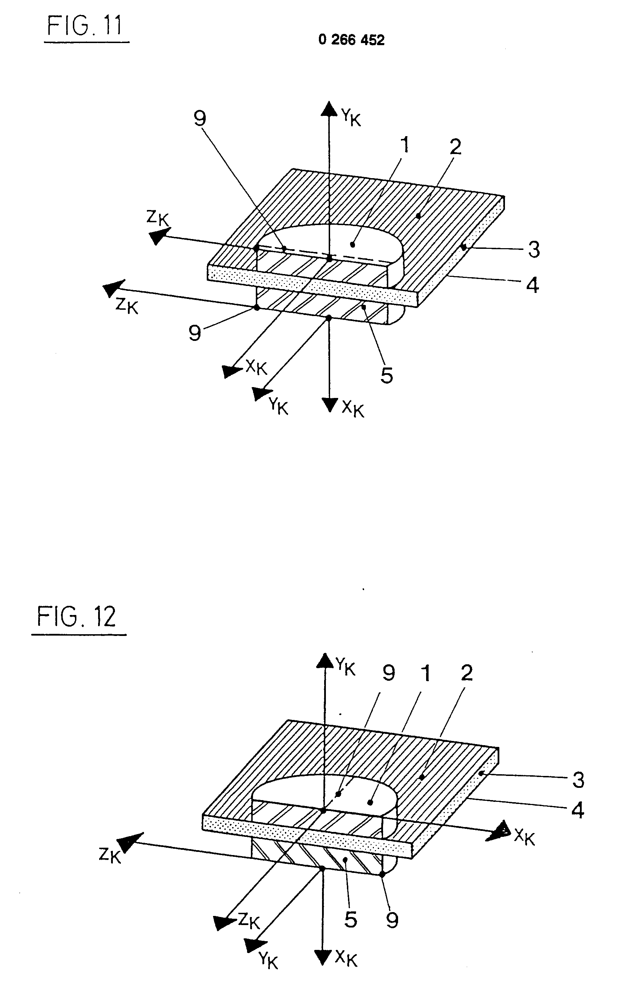

Fig. 11 zeigt ein Aufnehmerelement bei dem die kristallographischen Achsen $z_K$ des - schubempfindlichen Piezoelementes 1 und des druckempfindlichen Piezoelementes 5 parallel verlaufen.

Fig. 12 stellt ein analoges Aufnehmerelement dar, bei welchem die Empfindlichkeitsrichtung des Schubelementes 1 um 90° um die Flächennormale gedreht ist. Die kristallographischen Achsen $z_K$ der beiden Piezoelemente 1, 5 verlaufen hier also rechtwinklig zueinander.

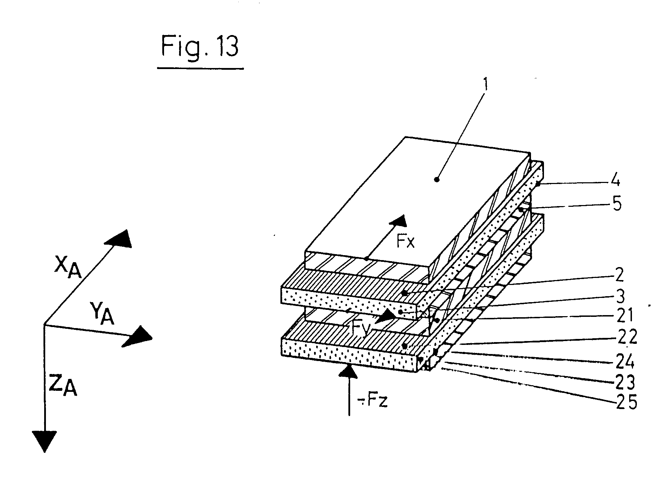

Fig. 13 zeigt eine Ausführungsform des Aufnehmerelementes gemäss Anspruch 5, welches durch Kombination von zwei gleichartigen Einzelelementen gemäss Fig. 1 entsteht. Eines der Einzelelemente 1 bis 5 ist gegenüber dem anderen 21 bis 25 um 90 Grad um die Achse $z_A$ gedreht. Dadurch stehen die Richtungen Fx, Fy der Schubempfindlichkeiten der Piezoelemente 1, 21 senkrecht zueinander und senkrecht zur Empfindlichkeitsrichtung $F_z$ der Piezoelemente 5, 25.

Somit resultiert ein Aufnehmerelement, mit dem drei orthogonele Kraftkomponenten gleichzeitig und unabhängig gemessen werden können.

Hierzu gleicht es dem bereits in Fig. 8 dargestellten Aufnehmerelement, mit dem Unterschied, dass ein zusätzliches druckempfindliches Piezoelement 25 vorhanden ist, womit höhere Empfindlichkeit erzielt wird. Das Aufnehmerelement nach Fig. 13 ist etwas dicker als jenes nach Fig. 8, kann aber aus einem einzigen Typ von Zweikomponenten-Aufnehmerelementen zusammengesetzt werden. Je nach Anwendung und Kostenlage wird somit entweder das in Fig. 8 oder das in Fig. 13 dargestellte Aufnehmerlement zu bevorzugen sein.

Dank der festen Verbindung der Piezoelement mit den Trägerplatten, die vorzugsweise aus Oxidkeramik bestehen können, entstehen sehr starre Aufnehmerelemente mit hoher Festigkeit. Dadurch ergibt sich die Möglichkeit, dünnere Piezoelemente als bei konventionellen Aufnehmern zu verwenden. Damit können vier wichtige Vorteile erzielt werden, nämlich höhere Eigenfrequenz, grössere Belastbarkeit, geringere Bauhöhe, sowie Materialeinsparungen.

Die Aufnehmerelemente benötigen nicht die üblichen Aufnehmergehäuse, sondern können direkt in Maschinenstrukturen integriert werden, beispielsweise in Sacklochbohrungen.

Die Erfindung ermöglicht somit, ein Bauelement mit kristallographisch vororientierten Piezoelementen zu schaffen, das eine rationelle und kostensparende Herstellung z.B. von Mehrkomponenten-Messplattformen für die Werkzeugmaschinentechnik erlaubt. Dadurch wird die Anzahl der für einen bestimmten Messzweck benötigten Einzelelemente und mechanischen Komponenten herabgesetzt und damit auch jene der elektrischen Anschlüsse. Beides bewirkt Einsparungen bei der Fabrikation und beim Testen, vermindert Ausschuss und erlaubt Einsparungen von kostspieligen Kristallmaterial. Infolge der geringen Bauhöhe der Aufnehmerelemente können die damit ausgerüsteten Messplattformen äusserst flach und damit elastisch unnachgiebig gebaut werden, was bei deren Einbau zwischen an sich starren Maschinenelementen sehr hohe Eigenfrequenzen ermöglicht und für dynamische Messungen, beispielsweise bei Zerspanungsvorgängen sehr vorteilhaft ist. Ausserdem ist der Einbau von Messplattformen umso einfacher, je flacher sie sind.

Dank ihrer niedriger Bauhöhe können die erfindungsgemässen Aufnehmerelemente auch als mit Krafteinleitungsscheiben verbundene Standardelemente direkt in Maschinenstrukturen eingebaut werden, zum Beispiel in Ausfräsungen oder Sacklochbohrungen. Dies ermöglicht universellere Anwendungsmöglichkeiten mit direkter Kraftübertragung als die übliche Montage der Aufnehmerelemente in Messplattformen, die wegen der Vielzahl verschiedener Maschinendimensionen sehr schwierig zu standardisieren sind.

Bei den Piezoelementen handelt es sich vorzugsweise um kristalline Piezomaterialien, doch ist die Erfindung hier-auf nicht beschränkt. Sie umfasst vielmehr auch andere Piezomaterialien, wie nicht-kristalline Piezokeramik, mit ausgeprägten Kraftempfindlichkeitsrichtungen, welche analog zu den beschriebenen Ausführungsformen orientierbar sind.

**Ansprüche**

1. Piezoelektrisches Aufnehmerelement, dadurch gekennzeichnet, dass es aus mindestens zwei Piezoelementen (1, 5) sowie mindestens einer dazwischen angeordneten Trägerplatte (3) aus isolierendem Material besteht und dass die Piezoelemente (1, 5) in Bezug auf das Koordinatensystem der Trägerplatte kristallographisch vororientiert und mit dieser fest verbunden sind.

2. Piezoelektrisches Aufnehmerelement nach Anspruch 1 oder 2, dadurch gekennzeichnet, dass es mindestens ein schubempfindliches Piezoelement (1) und mindestens ein druckempfindliches Piezoelement (5) enthält.

3. Piezoelektrisches Aufnehmerelement gemäss Anspruch 1, dadurch gekennzeichnet, dass das Aufnehmerelement (1,3,5) mit einem Paar Krafteinleitungsplatten (17, 18) fest verbunden ist.

4. Piezoelektrisches Aufnehmerelement gemäss Anspruch 1, 2 oder 3, dadurch gekennzeichnet, dass es aus einem druckempfindlichen Piezoelement (5), einem schubempfindlichen Piezoelement (1) und einer zwischenliegenden Trägerplatte (3) besteht, wobei die kristallographischen z-Achsen der beiden Piezoelemente parallel liegen.

5. Piezoelektrisches Aufnehmerelement gemäss einem der vorhergehenden Ansprüche, dadurch gekennzeichnet, dass die kristallographischen z-Achsen der beiden Piezoelemente rechtwinklig zueinander verlaufen.

6. Piezoelektrisches Aufnehmerelement gemäss einem der vorhergehenden Ansprüche, dadurch gekennzeichnet, dass die Piezoelemente (1, 5) ringförmig ausgebildet sind.

7. Piezoelektrisches Aufnehmerelement gemäss den Ansprüchen 2 bis 6 dadurch gekennzeichnet, dass die Richtung der Schubempfindlichkeit auf den schubempfindlichen Piezoelementen (1) markiert ist.

8. Piezoelektrisches Aufnehmerelement gemäss Ansprüchen 1 bis 5, dadurch gekennzeichnet, dass die Piezoelemente (1, 5) rechteckig sind.

9. Piezoelektrisches Aufnehmerelement gemäss einem der vorhergehenden Ansprüche, dadurch gekennzeichnet, dass dieses zur Aufnahme einer Vorspannschraube von einer zentralen Durchgangsbohrung (10) durchsetzt ist.

10. Piezoelektrisches Aufnehmerelement nach einem der vorhergehenden Ansprüchen, dadurch gekennzeichnet, dass die Trägerplatte (3) aus Oxidkeramik mit beidseitiger elektrisch leitender Beschichtung (2, 4) besteht, deren Flächen durch Isolationszonen so getrennt sind, dass sie verschiedene elektrische Potentiale aufweisen können.

11. Piezoelektrisches Aufnehmerelement gemäss einem der vorhergehenden Ansprüche, dadurch gekennzeichnet, dass die Piezoelemente mittels eines elektrisch leitenden Klebers (8) mit der Trägerplatte (3) verbunden sind.

12. Piezoelektrisches Aufnehmerelement gemäss einem der vorhergehenden Ansprüche, dadurch gekennzeichnet, dass die Trägerplatten (3) mit elektrischen Anschlüssen (7) versehen sind.

13. Piezoelektrisches Aufnehmerelement gemäss Ansprüchen 10 und 12, dadurch gekennzeichnet, dass die elektrisch leitenden Beschichtungen (2, 4) der Trägerplatten mit lötbaren Anschlussflächen (7) verbunden sind.

14. Piezoelektrisches Aufnehmerelement gemäss Ansprüchen 1 und 3, dadurch gekennzeichnet, dass die Richtung der Schubempfindlichkeit (16) auf einer Krafteinleitungsplatte (17) markiert ist.

15. Piezoelektrisches Aufnehmerelement gemäss den vorhergehenden Ansprüchen, dadurch gekennzeichnet, dass es aus der Kombination von zwei schub-und druckempfindlichen Einzelelementen (1 bis 5, 21 bis 25) besteht, deren Schubempfindlichkeitsrichtungen senkrecht zueinander stehen.

FIG. 1

1

$Y_A$

$X_A$

5

2

3

4

$Z_A$

Fig. 2

16

17

18

Fig. 3

FIG. 4

FIG. 5

FIG. 6

## FIG. 7

## FIG. 8

FIG. 9

FIG. 10

FIG. 11

0 266 452

FIG. 12

# Fig. 13

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-3 566 163 (H. FISCHER et al.) <br> * Spalte 3, Zeilen 21-25; Figuren * | 1-3,6, 7,9,15 | G 01 L 1/16 <br> G 01 L 5/16 |
| | --- | | |
| A | US-A-4 546 658 (H.A.F. ROCHA et al.) <br> * Zusammenfassung; Figur 1 * | 1,3,6 | |
| | --- | | |
| A | US-A-3 320 580 (A.O. SYKES) <br><br> * Spalte 7, Zeilen 6-13; Figur 7 * | 1,3,6, 9 | |
| | ----- | | |

RECHERCHIERTE SACHGEBIETE (Int Cl 4)

G 01 L 1
G 01 L 5
B 23 Q 17

Der vorliegende Recherchenbericht wurde für alle Patentansprüche erstellt

| Recherchenort | Abschlußdatum der Recherche | Prüfer |
|---|---|---|
| DEN HAAG | 07-07-1987 | VAN ASSCHE P.O. |